## Europäisches Patentamt
## European Patent Office
## Office européen des brevets

(19)

(11) Numéro de publication: **0 129 655**
**B1**

(12)

# FASCICULE DE BREVET EUROPÉEN

(45) Date de publication du fascicule du brevet:
22.07.87

(51) Int. Cl.⁴: **F 16 D 3/26,** F 16 D 3/44

(21) Numéro de dépôt: **84104091.8**

(22) Date de dépôt: **12.04.84**

(54) Dispositif d'accouplement à petit débattement pour arbres oscillants.

(30) Priorité: **18.04.83 FR 8306274**

(43) Date de publication de la demande:
**02.01.85 Bulletin 85/1**

(45) Mention de la délivrance du brevet:
**22.07.87 Bulletin 87/30**

(84) Etats contractants désignés:
**BE DE FR GB NL**

(56) Documents cité:
**FR-A-378 266**
**FR-A-763 623**
**FR-A-781 593**
**FR-A-868 026**
**FR-A-2 384 154**
**GB-A-3 519**
**GB-A-238 686**
**GB-A-2 110 792**
**US-A-1 581 802**
**US-A-2 712 739**

(73) Titulaire: **ALSTHOM, 38, avenue Kléber, F-75784
Paris Cédex 16 (FR)**

(72) Inventeur: **Obrecht, Georges, "Le Canton" - G.15,
F-38800 Pont de Claix (FR)**

(74) Mandataire: **Weinmiller, Jürgen, Lennéstrasse 9
Postfach 24, D-8133 Feldafing (DE)**

LIBER, STOCKHOLM 1987

EP 0 129 655 B1

## Description

L'invention concerne un dispositif d'accouplement à petit débattement pour arbres oscillants.

Un dispositif d'accouplement connu comporte - un premier et un deuxième embouts propres à être fixés aux extrémités en regard d'un premier et d'un deuxième arbres, ces embouts présentant deux axes qui concourent sensiblement en un centre d'accouplement, et comportant une première et une deuxième portées cylindriques concaves de rotation autour d'un premier et d'un deuxième axes d'oscillation sensiblement concourants au centre d'accouplement et perpendiculaires aux axes du premier et du deuxième embout, respectivement, les surfaces cylindriques de ces deux portées présentant un même diamètre, - une pièce intermédiaire présentant une première et une deuxième portée cylindriques convexes de rotation autour de deux axes d'oscillation perpendiculaires sensiblement concourants, cette pièce étant disposée entre les deux dits embouts et ceux-ci étant orientés de manière à faire coopérer ces portées convexes avec les portées concaves du premier et du deuxième embouts, respectivement, et à permettre ainsi à la fois la transmission d'un couple moteur entre ces deux arbres tournant autour de leurs axes, la transmission d'une poussée selon leurs axes, et une oscillation relatives de ces arbres par rotation autour des deux axes d'oscillation,

- chacun des embouts présentant une forme massive limitée à l'intérieur d'un dièdre convexe dont l'arête est constituée par l'axe d'oscillation de cet embout et dont la valeur est égale à un demi tour diminué du double d'un écart angulaire maximal qui est le plus grand angle que l'axe de cet embout peut faire par rapport au prolongement de l'axe de l'autre embout par rotation autour de l'axe d'oscillation, ladite portée cylindrique concave étant formée en creux dans l'embout à partir de ce dièdre de sorte que sa section droite présente la forme d'un arc de cercle de valeur angulaire égale à celle de ce dièdre, et que toute application à la pièce intermédiaire d'une ou plusieurs forces perpendiculaires à la fois à l'axe de l'embout et à celui de son axe d'oscillation et notamment toute transmission d'un couple entraîne l'apparition d'une réaction longitudinale tendant à écarter l'embout de cette pièce, la longueur de cette portée concave selon les génératrices du cylindre étant égale à celle de la portée convexe de cette pièce de manière à empêcher celle-ci de se déplacer dans la portée concave parallèlement à l'axe d'oscillation de l'embout.

Un tel dispositif est connu par la demande de brevet britannique GB-A-2 110 792 (TOUS).

Dans ce dispositif connu la pièce intermédiaire présente la forme de deux troncs de demi cylindres à faces extrêmes demi circulaires planes avec un diamètre des demi cercles plus grand que la longueur du tronc entre faces extrêmes, la pièce complète étant formée par ces deux troncs de demi cylindres accolés par leurs faces planes contenant les axes des cylindres, et présentant une forme en croix avec des angles dièdres en creux. Si on considère comment les contraintes varient selon la longueur de la pièce, c'est-à-dire parallèlement aux axes des arbres accouplés, il apparait que la transmission des couples par ce grain se fait, au milieu de la longueur de la pièce, à travers une section carrée qui est commune aux deux troncs de demi cylindre, et qui est plus petite que les sections voisines, et que ceci n'est pas favorable à la transmission d'un couple ou d'une poussée axiale importante avec un encombrement limité.

Il apparaît plus généralement que ce dispositif connu transmet difficilement des poussées axiales importantes et des couples importtants, résiste mal aux chocs axiaux et est coûteux tant à sa fabrication que lors de sa maintenance, notamment en raison des difficultés de démontage et remontage.

La présente invention à pour but d'éviter ces inconvénients dans le cas où le demi angle d'oscillation de chaque arbre est faible, inférieur par exemple à 10° environ. Elle permet d'obtenir les avantages suivants:
- poussée axiale importante
- couple transmis important
- faible encombrement
- grande résistance aux chocs axiaux
- simplicité de montage, de démontage, d'entretien et d'adaptation à des conditions diverses d'environnement chimique et thermique
- simplicité de réalisation.

Elle a pour objet un dispositif d'accouplement du genre précédemment mentionné, ce dispositif permettant d'obtenir ces avantages grâce aux dispositions suivantes:

La pièce intermédiaire est constituée par un grain massif présentant une surface qui est convexe en tous ses points et dont deux parties forment lesdites portées convexes, ces portées étant demi-cylindriques avec une section droite en forme de demi-cercle et avec une longueur axiale égale au diamètre de ce demi-cercle, le centre de ce demi-cercle et le milieu de cette longueur coincidant sensiblement avec le centre d'accouplement, de sorte que la surface de ce grain est au moins principalement constituée par les deux portées demi-cylindriques prolongées chacune, aux extrémités des demi-cercles du cylindre, par deux portées planes demi-circulaires constituant des faces extrêmes d'un volume demi-cylindrique dont la surface latérale constitue l'autre portée demi-cylindrique, et que ce grain peut transmettre à la fois un couple moteur élevé et une poussée axiale élevée, tout en étant facile à usiner.

Chaque portée cylindrique concave est formée par une coquille rapportée dont une première surface intérieure est usinée sensiblement en demi-cylindre concave pour coopérer avec une portée demi-cylindrique du grain massif, dont une deuxième et une troisième surfaces intérieures sont planes et demi-circulaires pour coopérer avec les portées planes demi-circulaires de ce grain, et dont la surface extérieure s'appuie sur les parois d'un logement creusé dans l'embout pour empêcher un déplacement ou une déformation de cette coquille, de manière à permettre un remplacement facile des pièces frottantes qui assurent la transmission des couples. Plus particulièrement chaque dite coquille est constituée par deux demi-coquilles rapportées disposées côte-à-côte dans un logement prismatique à base carrée creusé dans l'embout et présentant chacune une surface de portée concave en demi cylindre et une surface de portée plane sensiblement en demi cercle.

L'organe de maintien est constitué par un fourreau rigide fixé au premier embout, prolongeant celui-ci en passant autour du deuxième embout et muni d'une portée sphérique concave qui coopère avec une portée sphérique convexe formée sur le deuxième embout, ces portées étant centrées toutes deux sur le centre d'accouplement et limitées chacune à une bande annulaire entourant le deuxième arbre.

La portée sphérique concave est portée par une bague vissée dans le fourreau et formant saillie radiale intérieure dans ce fourreau de manière à permettre la mise en place du deuxième embout dans ce fourreau avant la mise en place de cette bague et de rattraper un jeu éventuel après usure.

Les portées sphériques concave et convexe sont portées par deux bagues indépendantes respectivement concave et convexe maintenues en place par une bague vissée dans le fourreau.

A l'aide des figures schématiques ci-jointes on va décrire ci-après, à titre non limitatif, comment l'invention peut être mise en oeuvre. Il doit être compris que les éléments décrits et représentés peuvent, sans sortir du cadre de l'invention, être remplacés par d'autres éléments assurant les mêmes fonctions techniques. Lorsqu'un même élément est représenté sur plusieurs figures il y est désigné par le même signe de référence.

La figure 1 représente une vue en élévation avec coupe axiale partielle d'un dispositif selon l'invention, le plan de coupe passant par les axes alignés des deux arbres accouplés et par l'axe d'oscillation de l'un de ces arbres, l'organe de maintien étant enlevé.

La figure 2 représente une vue en perspective d'un embout de la figure 1.

La figure 3 représente une vue en perspective du grain massif de la figure 1.

La figure 4 représente une vue du dispositif de la figure 1 avec coupe de l'organe de maintien.

La figure 5 représente une vue en perspective arrachée d'un embout de la figure 1 avec le grain de la figure 3.

La figure 6 représente une vue en coupe axiale d'une variante du dispositif de la figure 1.

Une idée essentielle de l'invention est d'assurer avec une seule pièce de forme très massive toutes les fonctions mécaniques de transmission des poussées, de transmission de couples, et d'oscillation.

L'accouplement est essentiellement constitué de trois pièces de fonction et de deux pièces de maintien.

Les trois pièces de fonction sont:
- deux embouts identiques 1 et 2,
- et un grain spécial 3.

Les deux pièces de maintien sont:
- un fourreau 20
- et une bague sphérique concave 21.

Chaque embout 1 et 2 est cylindrique et coaxial à l'arbre sur lequel il est monté. Il est usiné à son extrémité en angle dièdre convexe très plat 4 dont l'angle correspond à 180° - 2E,

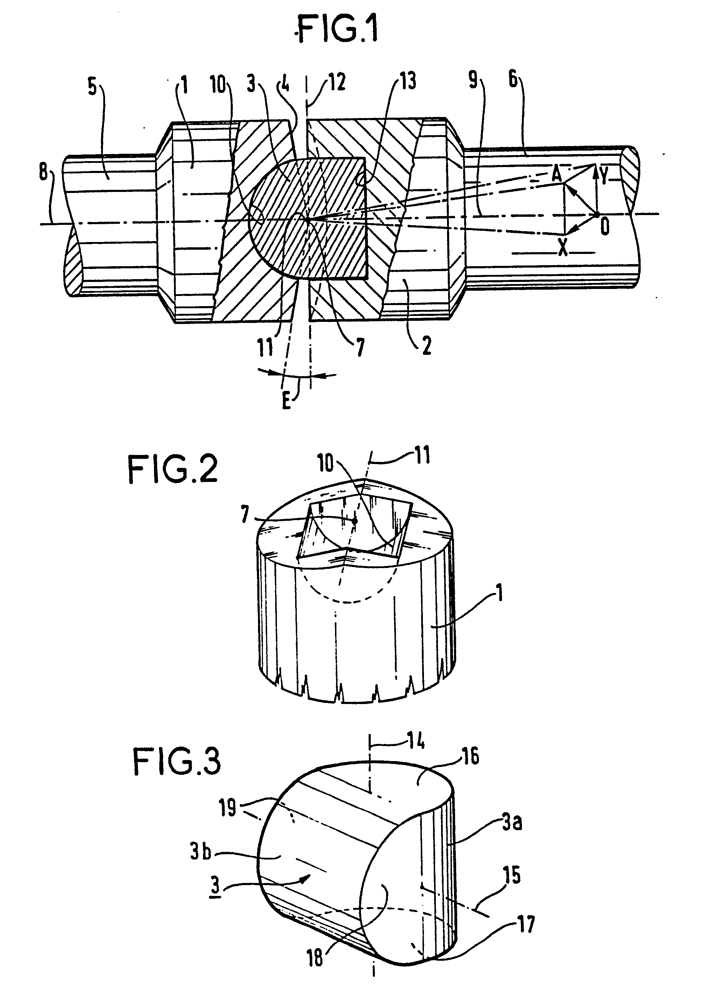

E étant l'angle maximal pouvant exister entre l'arbre 5 ou 6 et l'axe du grain 3 ou encore entre les arbres 5 et 6. L'usinage en dièdre peut bien entendu être remplacé par un usinage au tour en cône dont l'angle au sommet serait de 180°-2E. Les sommets des cônes des deux embouts sont alors confondus au point 7 constituant le centre d'accouplement précédemment mentionné et correspondant à l'intersection des axes 8 et des arbres 5 et 6 (figure 1).

Dans chaque embout 1 et 2 est creusé un logement presque demicylindrique 10, 13 dont le diamètre est égal à la longueur (figure 2).

En position montée, les axes 8 et 9 étant alignés, l'axe 11 du logement demi-cylindrique 10 de l'embout 1 est perpendiculaire à l'axe 12 du logement demi cylindrique 13 exécuté dans l'embout 2. Ces axes 11 et 12 concourent au point 7 et constituent les axes d'oscillation précédemment mentionnés.

Dans les logements 10 et 13 vient s'adapter un grain 3 qui a la particularité de se composer de deux demi cylindres dont la longueur est égale au diamètre, mais dont les axes 14 et 15 sont concourants et perpendiculaires.

La forme de ce grain est présentée plus précisément sur la figure 3.

On y remarque que les extrémités demi circulaires planes 16 et 17 du demi cylindre 3a se continuent par la surface cylindrique du demi cylindre 3b. De même, les surfaces planes 18, 19 des extrémités du demi cylindre 3b continuent la surface cylindrique de 3a.

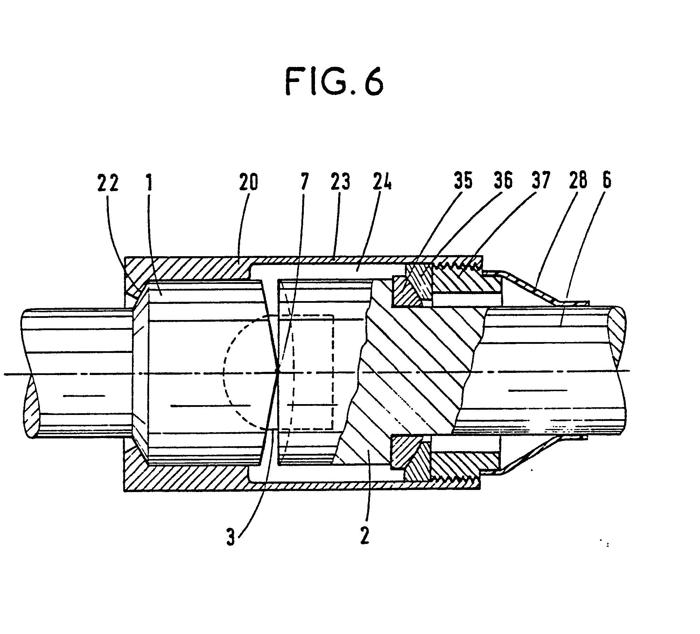

De préférence chaque logement demi-cylindrique tel que 10 est constitué par deux demi cylindres à demi longueur creusés dans deux pièces rapportées 31, 32 respectivement. Ces deux pièces sont fixées côte à côte dans un évidement prismatique à base carrée usinés dans l'embout 1 (voir figure 5). Elles constituent les demi-coquilles précédemment mentionnées. Elles présentent une surface demi cylindrique concave 32A et deux surfaces demi circulaires planes 31B et 32B. Leur surface extérieure 32C s'appuie sur les parois d'un logement 33 creusé dans l'embout 1.

L'exécution séparée de ces pièces permet d'y effectuer facilement des traitements appropriés sur les surfaces qui travaillent, pour éviter l'usure ou le grippage de ces surfaces.

Lorsque les piéces 1, 3 et 2 sont montées, tout mouvement quelconque OA d'oscillation de l'axe 9 par rapport à l'axe 8 peut se décomposer en deux mouvements à partir du point 7 qui est fixe:

- un mouvement OX de rotation autour de l'axe 12
- un mouvement XA de rotation autour de l'axe 11.

Dans le mouvement XA autour de l'axe 11 le grain 3 est solidarisé de l'embout 2 par les faces 16 et 17 et le grain 3 tourne librement dans le logement 10 de l'embout 1.

Par contre, dans le mouvement OX autour de l'axe 12, l'embout 2 pivote par son logement 13 autour du grain 3 qui est solidarisé dans ce mouvement de l'embout 1 par ses faces 18 et 19.

La transmission du couple s'effectue tant par les faces planes des logements 10 et 13 exécutés dans les embouts 1 et 2, et du grain 3 que par les surfaces cylindriques.

La haute résistance de cet accouplement est liée au fait qu'aucune des pièces ne travaille en flexion. Les principales contraintes sont des contraintes de cisaillement qui s'appliquent sur le carré représenté par les quatre diamètres des surfaces planes, et un matage trés faible des surfaces transmettant le couple.

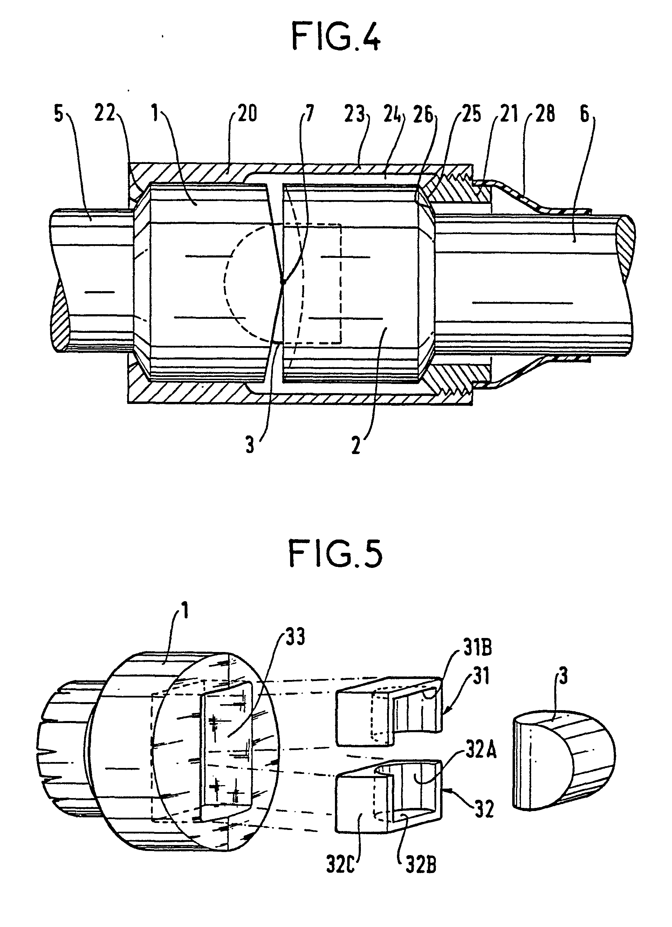

Les pièces de maintien sont un fourreau 20 et une bague 21 (voir figure 4).

Le fourreau 20 est monté glissant sur l'embout 1 sur lequel il s'appuie dans sa partie arrière grâce à un épaulement 22. Il est de ce fait lié à l'embout 1 dans tous ses mouvements. La partie avant 23 de ce fourreau est évidée pour former une chambre 24 qui autorise les débattements angulaires de l'embout 2.

La bague 21 vissée sur le fourreau 20 est munie d'une portée sphérique concave 25 coopérant avec une portée sphérique 26 de l'embout 2, surface 26 dont le centre de la sphère est le point 7 précédemment défini.

Le glissement relatif de la portée 25 sur la portée 26 permet donc le mouvement oscillatoire de l'arbre 6 et interdit le recul intempestif de l'embout 2 par rapport à l'embout 1.

Un manchon de caoutchouc 28 isole la zone travaillante vis-à-vis du milieu ambiant.

Dans le mode de réalisation de la figure 6 les portées sphériques concave et convexe sont portées par des bagues indépendantes respectivement concave 36 et convexe 35 maintenues en place par une bague 37 vissée dans le fourreau 20.

Le mode de réalisation de l'invention selon les figures 5 et 6 est un mode préféré et présente les avantages suivants par rapport au dispositif connu décrit dans la demande de brevet britannique GB-A-2 110 792 précitée:

Tout d'abord, tous les organes sont de formes très simples et facilement usinables par des procédés conventionnels.

Le grain 3 peut, par rapport à ses dimensions, transmettre des couples plus élevés, et chacune des surfaces travaillantes est en continuité avec la surface travaillante adjacente; en outre, la transmission du couple est répartie entre les surfaces planes prolongeant les surfaces cylindriques et les surfaces cylindriques, et il n'y a pas de variation de section du grain au milieu de la longueur de celui-ci de par l'égalité entre la longueur et le diamètre des troncs de demi cylindres.

Les portées concaves recevant le grain sont formées par des demi coquilles 31 et 32 dont les surfaces extérieures de forme très simple permettent la mise en place simple et rapide sur les embouts dans des logements de forme géométrique usinable dans ces embouts sans matériel ni aménagement sophistiqués.

Par ailleurs cette disposition procure l'avantage de permettre de changer à volonté les éléments travaillants (grain et demi-coquilles) et de les adapter (en matériaux et traitement de surface) aux conditions exactes de fonctionnement.

Cette disposition permet en particulier de proposer:
. des embouts standards, donc de coût réduit,
. des ensembles spécifiques (grain et demi-coquilles) adaptés à divers cas particuliers d'utilisation.

Enfin, le choix d'un fourreau cylindrique extérieur 20 dont l'axe est confondu avec celui de l'un des embouts 1 présente l'avantage d'abord de retenir et guider des coupelles d'appui sphérique 35 et 36 (là encore ce sont des pièces spécifiques d'usure que l'on peut à volonté adapter aux conditions de fonctionnement) et ensuite d'effectuer un réglage fin et un rattrapage des jeux axiaux de fonctionnement par l'écrou 37.

Un autre avantage de cette solution, est qu'étant de forme de révolution continue, l'étanchéité de fonctionnement du mécanisme peut être assurée simplement et surtout efficacement (manchon 28).

Par opposition à l'invention, le brevet britannique précité présente des pièces dont les formes sont plus torturées, les embouts 1 et 2 nécessitent des usinages sphériques de haute qualité ; la croix 3 semble d'un usinage des plus délicats, et d'une fragilité peu compatible avec les couples élevés permis par l'accouplement selon l'invention.

En outre, les embouts 1 et 2 de ce dispositif connu, tant par les surfaces sphériques que par les logements circulaires restent des pièces d'usure et ces pièces chères et très encombrantes (si on veut les performances que l'invention permet d'atteindre) doivent être totalement traitées (ou changées) pour s'adapter à des conditions spécifiques variables de fonctionnement.

En plus des inconvénients précités, l'ensemble formé par les paliers sphériques et les douilles est libre en rotation sphérique et cette liberté (3 degrés) peut être préjudiciable (chocs et vibrations) à la durée de vie de cet accouplement.

En résume l'invention fournit un accouplement qui est parfaitement adapté aux couples élevés et aux fortes poussées sous faible déflexion, et qui est de ce fait particulièrement efficace dans des systèmes de forage.

**Revendications**

1. Dispositif d'accouplement à petit débattement pour arbres oscillants, ce dispositif comportant
- un premier (1) et un deuxième (2) embouts propres à être fixés, aux extrémités en regard d'un premier (5) et d'un deuxième (6) arbres, ces embouts présentant deux axes (8, 9) qui concourent sensiblement en un centre d'accouplement (7), et comportant une première (10) et une deuxième (13) portées cylindriques concaves de rotation autour d'un premier (11) et d'un deuxième (12) axes d'oscillation sensiblement concourants au centre d'accouplement et perpendiculaires aux axes du premier et du deuxième embout, respectivement, les surfaces cylindriques de ces deux portées présentant un même diamètre,
- une pièce intermédiaire (3) présentant une première (3a) et une deuxième (3b) portée cylindriques convexes de rotation autour de deux axes d'oscillation perpendiculaires sensiblement concourants, cette pièce étant disposée entre les deux dits embouts et ceux-ci étant orientés de manière à faire coopérer ces portées convexes avec les portées concaves du premier et du deuxième embouts, respectivement, et à permettre ainsi à la fois la transmission d'un couple moteur entre ces deux arbres tournant autour de leurs axes, la transmission d'une poussée selon leurs axes, et une oscillation relatives de ces arbres par rotation autour des deux axes d'oscillation,
- chacun des embouts présentant une forme massive limitée à l'intérieur d'un dièdre convexe (4) dont l'arête est constituée par l'axe d'oscillation (11) de cet embout et dont la valeur (180° - 2E) est égale à un demi tour diminué du double d'un écart angulaire maximal (E) qui est le plus grand angle que l'axe (8) de cet embout peut faire par rapport au prolongement de l'axe (9) de l'autre embout par rotation autour de l'axe d'oscillation, ladite portée cylindrique concave (10) étant formée en creux dans l'embout (1) à partir de ce dièdre de sorte que sa section droite présente la forme d'un arc de cercle de valeur angulaire égale à celle de ce dièdre, et que toute application à la pièce intermédiaire d'une ou plusieurs forces perpendiculaires à la fois à l'axe de l'embout et à celui de son axe d'oscillation et notamment toute transmission d'un couple entraîne l'apparition d'une réaction longitudinale tendant à écarter l'embout de cette pièce, la longueur de cette portée concave selon les génératrices du cylindre étant égale à celle de la portée convexe de cette pièce (3) de manière à empêcher celle-ci de se déplacer dans la portée concave parallèlement à l'axe d'oscillation (11) de l'embout,

- ce dispositif comportant en outre un organe de maintien (20) reliant les deux embouts (1, 2) pour les empêcher de s'écarter l'un de l'autre sous l'action de ladite réaction longitudinale,
- ce dispositif étant caractérisé par le fait que la pièce intermédiaire est constituée par un grain massif (3) présentant une surface qui est convexe en tous ses points et dont deux parties forment lesdites portées convexes (3a, 3b), ces portées étant demi-cylindriques avec une section droite en forme de demi-cercle et avec une longueur axiale égale au diamètre de ce demi-cercle, le centre de ce demi-cercle et le milieu de cette longueur coincidant sensiblement avec le centre d'accouplement (7), de sorte que la surface de ce grain est au moins principalement constituée par les deux portées demi-cylindriques prolongées chacune, aux extrémités des demi-cercles du cylindre, par deux portées planes demi-circulaires (16, 17) constituant des faces extrêmes d'un volume demi-cylindrique dont la surface latérale constitue l'autre portée demi-cylindrique, et que ce grain peut transmettre à la fois un couple moteur élevé et une poussée axiale élevée, tout en étant facile à usiner.

2. Dispositif selon la revendication 1, caractérisé par le fait que chaque dite portée cylindrique concave (10) est formée par une coquille rapportée (31, 32) dont une première surface intérieure (32A) est usinée sensiblement en demi-cylindre concave pour coopérer avec une portée demi-cylindrique du grain massif (3), dont une deuxième et une troisième surfaces intérieures (31B, 32B) sont planes et demi-circulaires pour coopérer avec les portées demi-circulaires de ce grain, et dont la surface extérieure (32C) s'appuie sur les parois d'un logement (33) creusé dans l'embout (1) pour empêcher un déplacement ou une déformation de cette coquille, de manière à permettre un remplacement facile des pièces frottantes (3, 31, 32) qui assurent la transmission des couples.

3. Dispositif selon la revendication 2, caractérisé par le fait que chaque dite coquille est constituée par deux demi-coquilles rapportées (31, 32) disposées côte-à-côte dans un logement prismatique à base carrée creusé dans l'embout (1) et présentant chacune une surface de portée concave sensiblement en demi-cylindre et une surface de portée plane sensiblement en demi-cercle.

4. Dispositif selon la revendication 1, caractérisé par le fait que l'organe de maintien est constitué par un fourreau rigide (20) fixé au premier embout (1), prolongeant celui-ci en passant autour du deuxième embout (2) et muni d'une portée sphérique concave (25) qui coopère avec une portée sphérique convexe (26) formée sur le deuxième embout, ces portées étant centrées toutes deux sur le centre d'accouplement (7) et limitées chacune à une bande annulaire entourant le deuxième arbre (6).

5. Dispositif selon la revendication 4, caractérisé par le fait que la portée sphérique concave (25) est portée par une bague (21) vissée dans le fourreau (20) et formant saillie radiale intérieure dans ce fourreau de manière à permettre la mise en place du deuxième embout (2) dans ce fourreau avant la mise en place de cette bague et de rattraper un jeu éventuel après usure.

6. Dispositif selon la revendication 1, caractérisé par le fait que l'écart angulaire maximal (E) n'est pas supérieur à 10° environ.

7. Dispositif selon la revendication 3, caractérisé par le fait que les portées sphériques concave et convexe sont formées par deux bagues indépendantes respectivement concave (36) et convexe (35) maintenues en place par une bague (37) vissée dans le fourreau (20).


**Patentansprüche**

1. Kupplungsvorrichtung mit kleinem Fluchtwinkel für oszillierende Wellen, wobei diese Vorrichtung aufweist
- ein erstes (1) und ein zweites Ansatzstück (2), die an den einander gegenüberliegenden Enden einer ersten (5) und einer zweiten Welle (6) befestigt werden können, wobei diese Ansatzstücke zwei Achsen (8, 9), die sich im wesentlichen in einem Kupplungszentrum (7) schneiden, und ein erstes (10) und ein zweites (13) zylindrisches konkaves Auflager aufweisen, die zu einer ersten (11) bzw. einer zweiten (12) Schwingachse drehsymmetrisch sind, welche im wesentlichen im Kupplungszentrum zusammenlaufen und senkrecht zu den Achsen des ersten bzw. zweiten Ansatzstücks liegen, wobei die zylindrischen Oberflächen dieser beiden Auflager den gleichen Durchmesser aufweisen,
- ein Zwischenstück (3) mit einer ersten (3a) und einer zweiten (3b) zylindrischen konvexen Lagerfläche, die zu zwei senkrechten und im wesentlichen sich schneidenden Schwingachsen drehsymmetrisch sind, wobei dieses Stück zwischen den beiden Ansatzstücken angeordnet ist und diese so ausgerichtet sind, daß diese konvexen Lagerflächen mit den konkaven Auflagern des ersten bzw. des zweiten Ansatzstücks zusammenwirken, und so gleichzeitig die Übertragung eines Antriebsdrehmoments zwischen diesen beiden um ihre Achsen drehenden Wellen, die Übertragung eines Stoßes entlang ihrer Achsen und eine relative Oszillation dieser Wellen durch Drehung um die beiden Oszillationsachsen zu ermöglichen,
- wobei jedes der Ansatzstücke eine massive Form aufweist, die im Inneren eines konvexen Dieders (4) begrenzt ist, dessen Kante von der Oszillatationsachse (11) dieses Ansatzstücks gebildet wird und dessen Winkel (180° - 2E) gleich einer halben Umdrehung minus dem doppelten Wert einer maximalen Winkelabweichung (E) ist, der der größte Winkel ist, den die Achse (8) dieses Ansatzstücks in bezug auf die Verlängerung der Achse (9) des anderen Ansatzstücks durch Drehung um die Oszillationsachse einnehmen kann, wobei das zylindrische konkave Auflager (10) als Höhlung in dem Absatzstück (1) ausgehend von diesem Dieder ausgebildet wird, so daß sein Querschnitt die Form eines Kreisbogens mit einem Winkelwert gleich dem des Dieders aufweist und so daß jede Einwirkung von einer oder mehreren Kräften auf das Zwischenstück, die zugleich senkrecht zur Achse des Ansatzstücks und zu seiner Oszillationsachse angreifen und insbesondere jede Übertragung eines Drehmoments das Auftreten einer Reaktion in Längsrichtung bewirken, die die Neigung hat, das Ansatzstück von diesem Stück zu entfernen, wobei die Länge dieses konkaven Auflagers gemäß den Mantellinien des Zylinders gleich der der konvexen Lagerfläche des Zwischenstücks (3) ist, um das letztere daran zu hindern, sich in dem konkaven Auflager parallel zur Oszillationsachse (11) des Ansatzstücks zu verschieben,
- wobei diese Vorrichtung weiter ein Halteorgan (20) aufweist, das die beiden Ansatzstücke (1, 2) verbindet, um sie daran zu hindern, sich unter der Einwirkung der Reaktion in Längsrichtung voneinander zu entfernen,
- dadurch gekennzeichnet, daß das Zwischenstück aus einem massiven Block (3) besteht und eine Oberfläche besitzt, die in allen Punkten konvex ist und von der zwei Bereiche die konvexen Lagerflächen (3a, 3b) bilden, wobei diese Lagerflächen Halbzylinder mit einem Querschnitt in Halbkreisform und mit einer axialen Länge gleich dem Durchmesser dieses Halbkreises sind, wobei das Zentrum dieses Halbkreises und die Mitte dieser Länge im wesentlichen mit dem Kupplungszentrum (7) zusammenfallen, so daß die Oberfläche dieses Blocks zumindest hauptsächlich aus den beiden halbzylinderförmigen Lagerflächen besteht, die je an den Enden der Halbkreise des Zylinders durch zwei halbkreisförmige eben Lagerflächen (16, 17) verlängert sind, welche Endseiten eines halbzylindrischen Volumens bilden, dessen seitliche Oberfläche die andere halbzylindrische Lagerfläche bildet, und daß dieser Block zugleich ein hohes Antriebsdrehmoment und große axiale Stoßkräfte übertragen kann und leicht herzustellen ist.

2. Vorrichtung nach Anspruch 1, dadurch gekennzeichnet, daß jedes zylindrische konkave Auflager (10) von einer eingesetzten Schale (31, 32) gebildet wird, von der eine erste innere Oberfläche (32A) im wesentlichen als konkaver Halbzylinder geformt ist, um mit einer halbzylindrischen Lagerfläche des massiven Blocks (3) zusammenzuwirken, von dem eine zweite und eine dritte innere Oberfläche (31B, 32B) eben und halbkreisförmig sind, um mit den halbkreisförmigen Lagerflächen dieses Blocks zusammenzuwirken, und von dem die äußere Oberfläche (32C) auf den Wänden eines Hohlraums (33) aufliegt, der in dem Ansatzstück (1) angebracht ist, um eine Verschiebung oder eine Verformung dieser Schale zu verhindern, so daß ein Austausch der reibenden Teile (3, 31, 32) leicht möglich wird, die die Übertragung der Drehmomente bewirken.

3. Vorrichtung nach Anspruch 2, dadurch gekennzeichnet, daß jede Schale aus zwei eingesetzten Halbschalen (31, 32) besteht, die nebeneinander in einem prismatischen Hohlraum mit viereckiger Basis angeordnet sind, der im Ansatzstück (1) angebracht ist, und je eine im wesentlichen halbzylindrische konkave Lagerfläche und eine im wesentlichen halbkreisförmige ebene Lagerfläche aufweisen.

4. Vorrichtung nach Anspruch 1, dadurch gekennzeichnet, daß das Halteorgan von einer starren Buchse (20) gebildet wird, die am ersten Ansatzstück (1) befestigt ist, dieses verlängert, indem sie um das zweite Ansatzstück (2) herum verläuft, und die mit einer sphärisch-konkaven Lagerfläche (25) versehen ist, die mit einer sphärisch-konvexen Lagerfläche (26) zusammenwirkt, die auf dem zweiten Ansatzstück ausgebildet ist, wobei diese beiden Lagerflächen auf das Kupplungszentrum (7) zentriert sind und je an einem die zweite Welle (6) umgebenden ringförmigen Band begrenzt sind.

5. Vorrichtung nach Anspruch 4, dadurch gekennzeichnet, daß die sphärisch-konkave Lagerfläche (25) von einem Ring (21) getragen wird, der in die Buchse (20) eingeschraubt ist und radial nach innen in diese Buchse vorsteht, so daß das Einführen des zweiten Ansatzstücks (2) in diese Buchse vor dem Einsetzen dieses Rings möglich ist und ein eventuell durch Abnutzung auftretendes Spiel aufgefangen werden kann.

6. Vorrichtung nach Anspruch 1, dadurch gekennzeichnet, daß der maximale Winkelabstand (E) nicht größer als etwa 10° ist.

7. Vorrichtung nach Anspruch 3, dadurch gekennzeichnet, daß die sphärisch-konkaven und sphärisch-konvexen Lagerflächen von zwei unabhängigen konkaven bzw. konvexen Ringen (36, 35) gebildet werden, die von einem Ring (37) an ihrer Stelle gehalten werden, der in die Buchse (20) eingeschraubt ist.

## Claims

1. A coupling device for shafts which oscillate according to a small angle, the device comprising:
- a first (1) and second (2) end piece suitable for being attached to the facing ends of a first (5) and second (6) shaft, these end pieces having two axes (8, 9) which substantially intersect at a coupling center (7), and having a first (10) and a second (13) concave cylindrical bearing surface which are of circular symmetry about a first (11) and a second (12) oscillation axis respectively which substantially intersect at the coupling center and which are perpendicular to the axes of the fist and second end pieces respectively, the cylindrical bearing surfaces being of the same diameter,
- an intermediate piece (3) having a first (3a) and a second (3b) convex cylindrical bearing surface which are of circular symmetry about two substantially intersecting perpendicular oscillation axes, this intermediate piece being disposed between the two said end pieces which are oriented in such a manner that these convex bearing surfaces co-operate with the concave bearing surfaces of the first and second end pieces respectively, thereby simultaneously enabling driving torque to be transmitted between said two shafts when rotating about their axes, enabling axial thrust to be transmitted according to their axes, and enabling said shafts to oscillate relative to each other by rotating about said two oscillation axes,
- each of said end pieces being in the form of a solid delimited to the inside of a convex dihedron (4) the edge of which is constituted by the oscillation axis (11) of this end piece, the dihedron angle (180°-2E) being equal to 180° less twice the maximum angle of deflection (E) between the axis (8) of this end piece and the extension of the axis (9) of the other end piece, said concave cylindrical bearing surface (10) being hollowed out in the front face of the end piece (1) on the basis of said dihedron, such that its cross section is an arc of a circle extending over said dihedron angle and such that, when any force is applied to the intermediate piece in a direction which is perpendicular both to the longitudinal axis of the end piece and to its oscillation axis, and in particular when any torque is transmitted thereby, a longitudinal reaction is created tending to urge the end piece away from the intermediate piece, the length of the cylindrical concave bearing surface parallel to the generator lines of the cylinder being equal to the length of the convex bearing surface of the intermediate piece (3) so as to prevent the intermediate piece from moving in the cavity of the concave bearing surface in a direction parallel to the oscillation axis (11) of the end piece,
- the device further comprising a retaining member (20) for holding said end pieces (1, 2) together in order to prevent them from moving away from each other under the effect of said longitudinal reaction,
- this device being characterized in that the intermediate piece is constituted by a solid core (3) having a surface which is convex at all points, said surface including two portions which constitute said convex bearing surfaces (3a, 3b) which are semi-cylindrical and have a cross section in the form of a semicircle and the axial length of which is equal to the diameter of this semicircle, the center of the semicircle and the mid point of said axial length substantially coinciding with the coupling center (7) such that the surface of the core is at least mostly constituted by said semi-cylindrical bearing surfaces, each of which is extended by two plane semi-circular bearing surfaces (16, 17) constituting terminal surfaces of a semi-cylindrical volume the lateral surface of which constitutes the other semi-cylindrical bearing surface, and that this core is capable of transmitting high driving torque and high axial thrust simultaneously, while being easy to machine.

2. A device according to claim 1, characterized in that each concave cylindrical bearing surface (10) is in the form of an add-on shell (31, 32) having a first inside surface (32A) which is machined according to a substanstially semi-cylindrical concave shape for co-operating with a semi-cylindrical bearing surface of the solid core (3), and having plane and semicircular second and third inside surfaces (31B, 32B) for co-operating with the plane semi-cylindrical bearing surfaces of the core, the outside surfaces (32C) of the shell bearing against the walls of a recess (33) hollowed out of the end piece (1) to prevent the shell from moving or from distorting, thereby enabling friction parts (3, 31, 32) which ensure the torque transmission to be readily replaced.

3. A device according to claim 2, characterized in that each of said shells is constituted by two add-on half-shells (31, 32) which are placed side-by-side in a prismatic recess of square section hollowed out of the end piece (1), each half-shell having a substantially semi-cylindrical concave bearing surface and a semi-circular plane bearing surface.

4. A device according to claim 1, characterized in that the retaining member is constituted by a rigid sheath (20) which is fixed to the first end piece (1) and which extends beyond the first end piece to encompass the second end piece (2), said sheath being provided with a spherical concave bearing surface (25) which co-operates with a spherical convex bearing surface (26) on the second end piece, both of said spherical bearing surfaces being centered on the coupling center (7) and each being limited to an annular region surrounding the second shaft (6).

5. A device according to claim 4, characterized in that the concave spherical bearing surface (25) is formed in a ring (21) which is screwed into the sheath (20) and which projects radially inwardly therefrom so as to enable the second end piece (2) to be inserted in the sheath before the ring is put into place, and also enabling axial clearance due to wear to be compensated for.

6. A device according to claim 1, characterized in that the maximum angle of deflection (E) does not exceed 10°.

7. A device according to claim 3, characterized in that the spherical concave and convex bearing surfaces are formed on two independent rings, one (35) having the convex surface, the other (36) the concave surface, which rings are both held in place by a ring (37) which is screwed into the sheath (20).

0 129 655

# FIG.1

# FIG.2

# FIG.3

1

# FIG.4

# FIG.5

# FIG. 6